# EUROPEAN PATENT APPLICATION

(11) **EP 4 354 180 A1**
(43) Date of publication of application: **17.04.2024**
(21) Application number: 23191227.0
(22) Date of filing: 14.08.2023
(51) Int. Cl.: G01S 17/89, H04B 10/118, H04B 10/50, H04B 10/61, H04B 10/66, H04B 10/80

(54) **SYSTEM AND METHOD FOR MULTI-USE OPTICAL SYSTEM**

(30) Priority: 10.10.2022 EP 22382961
(71) Applicant: Urugus S.A., Montevideo (UY)
(72) Inventor: Vilaseca, David Ivan, Barcelona (ES)
(74) Representative: Vázquez Vázquez, Miriam

(57) **Abstract**

Systems, methods and devices for observation systems are provided. More specifically, an apparatus for an observation system is provided, the apparatus comprising: an optical subsystem comprising one telescope; at least one imaging device having a plurality of pixel sensors and configured to receive light that has passed through the optical subsystem; at least one optical transmitter/receiver configured to transmit an optical signal towards the optical subsystem and/or receive the optical signal from the optical subsystem; and a control module configured to control the optical subsystem, the at least one imaging device and the at least one optical transmitter/receiver. In addition, a satellite system and a computer-implemented method of operating an observation system are provided.

## Description

### CROSS REFERENCE TO RELATED APPLICATIONS

The present application claims priority to EP. Patent Application No.22382961.5, filed on October 10, 2022, and entitled "SYSTEM AND METHOD FOR MULTI-USE OPTICAL SYSTEM", the entire contents of which are incorporated herein in its entirety by reference.

### TECHNICAL FIELD

The present disclosure relates generally to systems and methods for imaging scenes and performing optical transmission/reception operations. More particularly, the present disclosure is related to systems and methods for imaging scenes having apparent motion while, simultaneously or in a complementary way, enabling optical transmission/reception operations.

### BACKGROUND

With the advent of new technologies in the space industry, there is a preference to design and build lightweight and cost-effective spacecraft systems, with the ability to provide reliable and high-quality services. Yet, given the amount of subsystems that need to be present in a satellite, and the environmental and launch conditions that the satellite needs to withstand, it becomes difficult to reduce the weight of the overall system, or simplify or optimize its architecture.

Moreover, space or aerial observation systems, and Earth Observation (EO) satellites in particular, with optical transmission/reception systems, need to use optical systems both for transmission/reception (such as for optical communications and/or for Light Detection and Ranging, or Laser Imaging, Detection, and Ranging (LIDAR)) and for imaging. Optical systems are necessary for optical transmission/reception as they are the elements responsible for transmitting optical signals to the transmission medium and/or receiving the optical signals from said medium. The characteristics of this optical system, such as the aperture of the telescope, define the area with which photons are collected or transmitted, and therefore a higher area contributes to a higher gain for the telescope. In a conventional configuration, the optical transmission/reception module is placed independently from the main telescope, such as next to it. However, as the characteristics of the optical transmission/reception module are improved, for example because it is desired to have a higher aperture, in order to have a higher gain, in order to transmit/receive information at higher speeds, this competes in mass and space with other elements of the observation system, such as with the main telescope used to capture images. Conventional spacecraft or satellite or aerial observation systems thus generally have different subsystems for the different operations which, in some instances, requires the duplication of system elements which could instead be combined, and this leads to large and heavy systems.

It would therefore be desirable to have observation systems and methods that allow to make a more efficient use of the available space, by avoiding duplicate elements.

### SUMMARY

Considerable advantages can be realized using the methods, apparatuses and systems described herein for observation systems with optical transmission/reception capabilities, which allow to image scenes while alternatively, complementary or simultaneously transmitting/receiving optical data, and at the same time maintaining a simple structure that optimizes and adds degrees of freedom in the design of the apparatuses and methods. For example, this can be achieved by using at least some of the elements of an optical subsystem for other purposes, such as optical communications. For example, advantages can be achieved by using at least part of the same optical path of the main telescope used for image capturing to capture all the necessary light to be used in optical communications.

Additionally or alternatively, at least some of the elements of the imaging subsystem may be used for light scanning applications, such as Light Detection and Ranging, or Laser Imaging, Detection, and Ranging (LIDAR) applications. For example, at least part of the same optical path of the main telescope used for image capturing and/or for optical communications may be used to capture all the necessary light, such as laser light, to be used for targeting an object or a surface with a laser light transmitter and measuring the time for the reflected light to return to the laser light receiver to determine lengths, distances or ranges, and/or to form images of a scene based on the transmitted/received laser light, useful for exposures with reduced or no solar light illuminating the object or surface, and/or to perform substance detection such as methane detection or wind speed detection.

In exemplary embodiments, at least some elements of the optical subsystem of an observation system, such as the telescope, can be used both for image capturing and optical transmission/reception applications, for example optical communications and/or applications based on light scanning technology. Advantage can be taken of a telescope with an aperture sufficiently large for image capturing, such that the same telescope can be used for optical transmission/reception applications.

In an example, this may be achieved by placing or mounting at least one imaging device and at least one optical transmitter/receiver on the same structure (stage, platform) of the positioning mechanism of the observation system, and switching an operation mode by moving the structure containing the at least one imaging device and the at least one optical transmitter/receiver using the positioning mechanism so that the at least one imaging device or the at least one optical transmitter/receiver is positioned to receive the incoming light that has passed through the telescope. In this exemplary configuration, the same optical subsystem (including telescope) and the same structure of the positioning mechanism (for example the same stage of piezoelectric motors), which may already have to be used for image capture and stabilization with solar illumination, can be used for optical communication, and/or for light scanning applications, thereby making a more efficient use of the available space, and allowing to use for optical transmission/reception a bigger aperture than the aperture allowed if the optical transmission/reception subsystem was located in a separate and independent subsystem in a satellite with limited space.

In an example, instead of placing or mounting at least one imaging device and at least one optical transmitter/receiver in the same structure of the positioning mechanism, multiple structures (platforms, stages) of the positioning mechanism may be used and the at least one imaging device may be mounted on a first structure, while the at least one optical transmitter/receiver may be mounted on a second structure situated at a different location than the first structure, so as to adapt to the available space. For example, an at least partially reflecting optical element (beam splitter, folding mirror, semi mirror, dichroic mirror) may be placed at a certain point along the optical path of the main telescope, such as at the focal plane of the main telescope. Said at least partially reflecting optical element may separate the incident light based on frequency, such that it is configured to reflect at least part of the incident light of certain frequency bands and to let light in other frequency bands pass. If the frequency bands of the light that passes through are used by the imaging device to capture images (for example frequency bands of the visible spectrum), the first structure on which the imaging device is mounted may be located so as to receive the light that passes through from the at least partially reflecting optical element, and if the frequency bands of the light that has been reflected by the at least partially reflecting optical elementare used by the optical transmitter/receiver for optical communications (for example frequency bands in the near infrared range), the second structure on which the optical transmitter/receiver is mounted may be located so as to receive said reflected light. Alternatively, if the frequency bands of the light that has been reflected by the at least partially reflecting optical element are used by the optical transmitter/receiver for light scanning applications (for example frequency bands in the ultraviolet, (near) infrared range or visible laser light), the second structure on which the optical transmitter/receiver is mounted may be located so as to receive said reflected light. In this manner, both the imaging device and the optical transmitter/receiver may be used simultaneously, and the same telescope may be used both for image capturing and for optical transmission/reception applications such as optical communications or light scanning applications; the light scanning applications may be used for example for forming images without solar light backscattering illumination, for determining surface topographies or for substance detection such as methane detection or detection of other trace gasses. A further advantage of using multiple structures of the positioning mechanism is the enhanced functionality provided to the system, since the positioning mechanism may control the different structures so as to be used for at least one of stabilization (e.g. stabilizing images captured with an imaging device), beam pointing (e.g. directing the optical transmission (Tx) beams by moving the transmitter, searching for optical reception (Rx) beams while moving the receiver), and scanning (e.g. a volume, area or surface).

This configuration, too, allows to use, for optical transmission/reception applications, a bigger aperture than the aperture generally allowed if the optical transmission/reception subsystem was located in a separate and independent subsystem. This dual use of at least some of the elements of the optical subsystem for optical transmission/reception applications also allows to separate the positioning and movement of the elements responsible for image capturing stabilization from the direction and speed of apparent motion of the scene. This separation allows to position and move the elements responsible for image capturing stabilization to efficiently and accurately provide image capturing stabilization, while sharing at least some elements of the optical subsystem (which includes at least a lens or telescope, and at least one partially or totally reflecting optical element) with an optical transmission/reception subsystem.

The present disclosure provides an apparatus for an observation system, the apparatus comprising: an optical subsystem comprising one telescope; at least one imaging device having a plurality of pixel sensors and configured to receive light that has passed through the optical subsystem; at least one optical transmitter/receiver configured to transmit an optical signal towards the optical subsystem and/or receive the optical signal from the optical subsystem; a positioning mechanism configured to position the at least one imaging device and/or the at least one optical transmitter/receiver based on a position of the optical subsystem; and a control module configured to control the positioning mechanism.

The present disclosure provides an apparatus for an observation system, the apparatus comprising: an optical subsystem comprising one telescope; at least one imaging device having a plurality of pixel sensors and configured to receive light that has passed through the optical subsystem; at least one optical transmitter/receiver configured to transmit an optical signal towards the optical subsystem and/or receive the optical signal from the optical subsystem; and a control module configured to control the optical subsystem, the at least one imaging device and the at least one optical transmitter/receiver.

According to embodiments, the apparatus further comprises at least one at least partially reflecting optical element configured to receive light and separate the received light based on frequency, so as to reflect a first part of the received light to be received by one of the at least one imaging device or the at least one optical transmitter/receiver, and to let a second part of the received light pass therethrough to be received by the other one of the at least one imaging device or the at least one optical transmitter/receiver.

According to embodiments, the at least one partially reflecting optical element is a beam splitter.

According to embodiments, the apparatus further comprises a positioning mechanism configured to move at least one of the at least one imaging device, the at least one optical transmitter/receiver or the at least one partially reflecting optical element, wherein the control module is configured to control the positioning mechanism.

According to embodiments, the apparatus further comprises a positioning mechanism configured to position the at least one imaging device and/or the at least one optical transmitter/receiver based on a position of the optical subsystem, wherein the control module is configured to control the positioning mechanism.

According to embodiments, the positioning mechanism is further configured to move at least one of the at least one imaging device along a first tracking axis or the at least one optical transmitter/receiver along a second tracking axis.

According to embodiments, the second tracking axis follows a direction different from a direction of the first tracking axis.

According to embodiments, the control module is configured to determine at least one of the direction of the first tracking axis and the direction of the second tracking axis based at least in part on a direction of the center of mass of the apparatus.

According to embodiments, the control module is configured to control the positioning mechanism to move the optical transmitter/receiver along at least one axis so as to generate a deflection in the transmitted optical signal when passing through the optical subsystem.

According to embodiments, the positioning mechanism is configured to move at least one sensor of the at least one imaging device.

According to embodiments, the at least one imaging device is mounted on a first stage and the at least one optical transmitter/receiver is mounted on a second stage different from the first stage.

According to embodiments, the at least one imaging device and the at least one optical transmitter/receiver are mounted one and the same stage, and wherein the control module is further configured to control the positioning mechanism to move the stage along a positioning axis so as to position one of the at least one imaging device or the at least one optical transmitter/receiver on a focal plane of the telescope.

According to embodiments, the imaging device is an area imaging device and the control module is further configured to, when the at least one area imaging device is positioned on the focal plane of the telescope, move the at least one area imaging device along the first tracking axis to compensate for an apparent motion of the scene.

According to embodiments, the imaging device is an area imaging device and the positioning mechanism is configured to move the at least one area imaging device along a first tracking axis in one or more cycles such that the at least one area imaging device is moved, in each of the one or more cycles, forward along the first tracking axis at a tracking speed that compensates for a speed of the apparent motion.

According to embodiments, the apparatus further comprises an imaging module, wherein the control module is configured to direct the at least one area imaging device to capture at least one exposure during each of the one or more cycles to generate one or more exposures, and wherein the imaging module is configured to form an image of the scene based at least in part on the one or more exposures.

According to embodiments, the optical transmitter/receiver is configured to perform optical communications and/or light detection and ranging, LIDAR, operations.

According to embodiments, the apparatus further comprises at least one phase modulation filter located before the at least one optical transmitter/receiver, configured to adjust the wavefront of the optical signal.

According to embodiments, the apparatus is all or partially on-board an aircraft or spacecraft, such as the satellite.

According to embodiments, the imaging device is an area imaging device.

The present disclosure provides a satellite system comprising the apparatus described above.

The present disclosure provides a satellite system comprising: an optical subsystem comprising one telescope; at least one imaging device having a plurality of pixel sensors and configured to receive light that has passed through the optical subsystem; at least one optical transmitter/receiver configured to transmit an optical signal towards the optical subsystem and/or receive the optical signal from the optical subsystem; a positioning mechanism configured to position the at least one imaging device and/or the at least one optical transmitter/receiver based on a position of the optical subsystem; one or more processors; a memory; and a plurality of programming instructions stored on the memory and executable by the one or more processors to perform acts including controlling the positioning mechanism.

The present disclosure provides a computer-implemented method of operating an observation system, the method comprising the steps of: a) starting an image capturing mode; b) controlling an imaging module to capture at least one exposure through at least one imaging device, wherein the imaging device is configured to receive light that has passed through an optical subsystem comprising one telescope; c) generating image-related results based at least in part on the at least one exposure; d) starting an optical transmission/reception mode; and e) controlling the at least one optical transmitter/receiver to operate in an optical communications mode, and/or in a light scanning mode, wherein the at least one optical transmitter/receiver is configured to transmit an optical signal towards the optical subsystem and/or receive the optical signal from the optical subsystem.

According to embodiments, step b) or c) and step e) are performed in a simultaneous or time overlapping manner. According to embodiments, step a) and step d) are performed in opposite order.

According to embodiments, the method further comprises, after step c): c1) controlling the positioning mechanism to move the at least one imaging device and at the least one optical transmitter/receiver located on one and the same stage.

According to embodiments, the method further comprises f) controlling the positioning mechanism to move the at least one imaging device and the at least one optical transmitter/receiver; and g) repeating at least steps a) - c).

The present disclosure provides a computer-implemented method of operating an observation system, the method comprising the steps of: a) controlling an imaging module to capture at least one exposure through at least one imaging device, wherein the imaging device is configured to receive light that has passed through an optical subsystem comprising one telescope; optionally generating image-related results based at least in part on the at least one exposure; and b) controlling the at least one optical transmitter/receiver to operate in an optical communications mode, and/or in a light scanning mode, wherein the at least one optical transmitter/receiver is configured to transmit an optical signal towards the optical subsystem and/or receive the optical signal from the optical subsystem.

According to embodiments, wherein step a) and step b) are performed in a simultaneous or time overlapping manner. In other words, step a) and step b) may be performed independently, and there may be a time frame in which the imaging module is capturing exposures and the at least one optical transmitter/receiver is transmitting/receiving data, so the two operating modes overlap their operations in time. According to embodiments, step a) and step b) are performed in opposite order.

According to embodiments, the method further comprises, between step a) and step b) and/or between step b) and step a): b1) controlling a positioning mechanism to move the at least one imaging device and the at least one optical transmitter/receiver located on one and the same stage.

According to embodiments, the method further comprises the step of: controlling the positioning mechanism to move the at least one imaging device and/or the at least one optical transmitter/receiver.

Further features and advantages, as well as the structure and operation of various embodiments are described in detail below, with reference to the accompanying drawings. It is noted that the invention is not limited to the specific embodiments described herein. Such embodiments are presented herein for illustrative purposes only. Additional embodiments will be apparent to persons skilled in the relevant art(s), based on the teachings contained herein.

### BRIEF DESCRIPTION OF THE DRAWINGS

The Detailed Description is set forth with reference to the accompanying figures. In the figures, the left-most digit(s) of a reference number identifies the figure in which the reference number first appears. The use of the same reference numbers in different figures indicates similar or identical items.
FIG. **1** shows a block diagram of an example observation system comprising an imaging apparatus usable to image scenes having apparent motion, according to embodiments of the present disclosure.
FIG. **2** **(2A, 2B, 2C)** schematically shows, in part, an arrangement of an example observation system according to embodiments of the present disclosure.
FIG. **3** **(3A** and **3B****)** schematically shows, in part, an arrangement of an example observation system according to embodiments of the present disclosure.
FIG. **4** is a flow diagram showing an example overview process using an observation system or apparatus for scenes in apparent motion, according to embodiments of the present disclosure.

### DETAILED DESCRIPTION OF EMBODIMENTS

The processes, systems, and devices described herein may be implemented in a number of ways. Example implementations are provided below with reference to the following figures to aid in illustration, although those examples are not meant to be taken in a limiting sense.

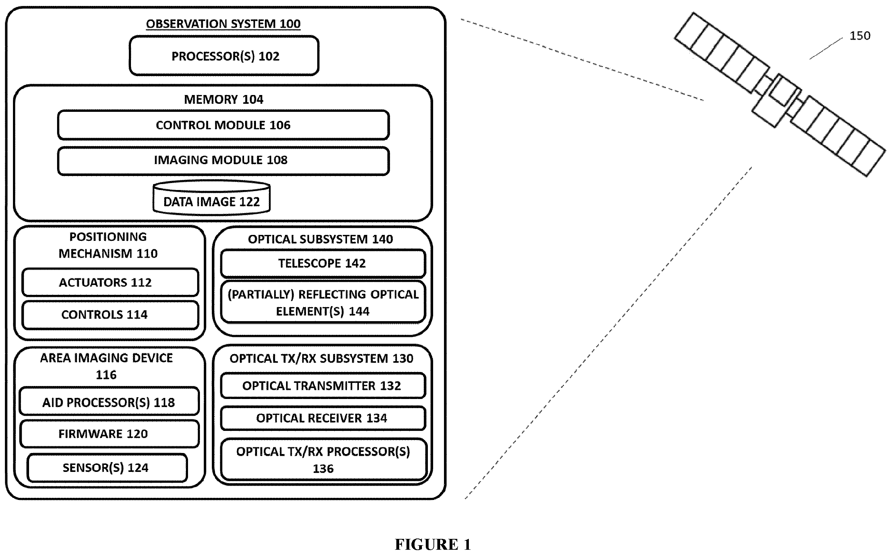

FIG. **1** shows a block diagram of an example observation system **100** or observation apparatus, usable to image scenes having apparent motion with or without solar light illumination, and/or for light scanning applications. The observation system **100** may be all or partially on-board an aircraft or spacecraft, such as a satellite **150,** such as a low Earth orbit (LEO) satellite. In some embodiments, some of the components of the observation system **100** may be ground-based or on-board a separate aircraft or spacecraft, with such ground-based or separate aircraft or spacecraft in communication with the system or apparatus that includes the optical subsystem, the positioning mechanism, the optical transmission/reception subsystem, and the imaging device, among other things. In some embodiments, also at least one of the optical subsystem, the positioning mechanism, the optical transmission/reception subsystem, and the area imaging device may be ground-based. The observation system **100** is configured as any suitable computing device or system.

Memory **104** may store program instructions and program modules that are loadable and executable on one or more processor(s) **102,** as well as data generated during execution of, and/or usable in conjunction with, these programs, such as image data, images, and so forth. Depending on the configuration and type of computing device used, the memory **104** of the observation system **100** may include volatile memory (such as random access memory (RAM)) and/or non-volatile memory (such as read-only memory (ROM), flash memory, etc.). Memory **104** may also include additional removable storage and/or non-removable storage including, but not limited to, flash memory, magnetic storage and/or optical storage, and/or tape storage that may provide non-volatile storage of computer-readable instructions, data structures, program modules, and other data for the observation system **100.** Memory **104** is an example of non-transitory computer-readable media. Non-transitory computer storage media includes volatile and non-volatile, removable and non-removable media implemented in any process or technology for storage of information such as computer-readable instructions, data structures, program modules, or other data. Computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory (such as NAND flash memory such as may be included in one or more nonvolatile memory cards, and including flash with both single-level and multi-level cell technologies) or other memory technology, compact disk read-only memory (CD-ROM), digital versatile disks (DVD) or other optical storage, magnetic cassettes, magnetic tape, magnetic disk storage or other magnetic storage devices, or any other non-transmission medium that can be used to store information for access by a computing device.

Memory **104** includes at least a control module **106** and an imaging module **108.** The control module may perform some or all of the control functions associated with capturing images or exposures in accordance with embodiments of the present disclosure. The control module **106** is executable by the one or more processors **102** to control, such as through one or more input/output interfaces, a positioning mechanism **110,** including controlling actuators **112** included in the positioning system, through one or more electronic controls **114** (such as controllers, which may in turn operate actuators **112** through one or more limit switches, checks, closed loop actuator controls, and so forth) to move, position, or otherwise manipulate various mechanical aspects of the positioning mechanism **110.** The actuators **112** include for example linear actuator(s) for focusing, rotary actuator(s), linear actuator(s) for tracking, sub-pixel transverse actuator(s), and other actuators and variations thereof according to various embodiments of the present disclosure.

The control module **106** is executable by the one or more processors **102** to control, such as through one or more input/output interfaces, at least one imaging device, which for the examples of at least some of the figures is an area imaging device (AID) **116.** It is however evident for the skilled person that other suitable imaging devices, such as line imaging devices, can also be used. For example, push-broom or whisk-broom sensors may be employed which rely on the forward motion of the satellite **150** to capture images. The AID **116** may be controlled to capture one or more exposures, and may be moved by the positioning mechanism **110** as will be explained elsewhere within this Detailed Description, so as to capture exposures while the AID or another element is moved (or while it stops) to compensate for the apparent motion of a scene being imaged according to various embodiments of the present disclosure. The control module **106** may be in addition configured to control at least one optical transmitter **132** and/or optical receiver **134** of an optical transmission/reception (Tx/Rx) subsystem **130,** as explained elsewhere within this Detailed Description.

The (at least one) AID **116** may include one or more AID processors **118** and firmware **120** (stored on a suitable, non-transitory computer-readable storage medium) to perform or otherwise control various functions of the AID **116.** The firmware **120** may be executable by the one or more AID processors **118** to control exposure times, time the exposure capture, determine sensor, orbit or image parameters or the like, store image data **122** on the memory **104,** and so forth.

The AID **116** may also include sensors **124,** such as light-sensitive sensors, such as for example semiconductor components suitable to implement at least one charge coupled device (CCD), at least one complementary metal oxide semiconductor (CMOS) sensor, and/or other suitable sensor architecture on the active surface of the AID **116.**

The imaging module **108** performs various image processing functions of the observation system **100,** including tone mapping to generate high dynamic range (HDR) images, a resolution enhancement algorithm to produce high-resolution images, and a stitching algorithm to generate images from multiple partially overlapping exposures, as well as other processing functions, such as blur removal, artifact removal, color enhancement, cropping, image conversion, image compression, data encryption, and so forth.

In exemplary embodiments, the firmware **120** of the AID **116** may be considered as an extension of one or both of the control module **106** and the imaging module **108,** with some or all of the functions of the control module **106** and/or the imaging module **108** performed on or by the firmware **120,** executing on the one or more processors **102.** In some embodiments, some or all of the functions of the control module **106,** the imaging module **108,** and/or other functions of the firmware **120** may be implemented as logic functions on the one or more processors **102** and/or AID processors **118.** For example, in some embodiments, the one or more processors **102** and/or AID processors **118** may include a central processing unit (CPU), a graphics processing unit (GPU), an application-specific integrated circuit (ASIC), a programmable logic device, such as a field programmable gate array (FPGA), a digital signal processor (DSP), a tensor processing units (TPU), any combination of these, or any other logic circuit to perform various functions, including various control functions of the control module **106.** The one or more processors **102** are processors dedicated to the observation system **100,** but in many instances may be the same processors that control the system or apparatus, such as the satellite **150.**

Some embodiments of the observation systems and apparatus described herein may be employed to take images of a celestial body, such as images of the Earth, from satellites, such as satellites in Low Earth Orbit (LEO). LEO satellites orbit at speeds relative to a stationary point on the Earth that make motion blur an important issue. In satellite embodiments, the observation system **100** includes an optical subsystem **140** including a telescope **142,** and the AID **116** is placed after the telescope, such as at the focal plane of the telescope. The aperture and focal distance of the telescope is selected so that the exposure times of typical ground scenes are below the cycle time of the positioning mechanism.

The optical transmission/reception subsystem (module, terminal) **130** is used for optical transmission/reception including, but not limited to, optical communications or light scanning applications including, but not limited to, substance detection, range determination, and so forth. The optical transmission/reception subsystem may comprise elements responsible to encode information into optical signals and transmit the optical signals to the communication medium and/or receive the optical signals from said medium and decode the optical signals to obtain information. In order to do so, the optical transmission/reception subsystem **130** may comprise an optical transmitter **132** for transmitting coherent light (e.g. laser light) or non-coherent light, an optical receiver **134,** such as a detector (e.g., photodiode, a silicon photomultiplier (SiPM) or another suitable type) for receiving coherent/non-coherent light, optical Tx/Rx (transmission/reception) processor(s) **136** for controlling at least the transmitter and receiver and the overall operations of the optical transmission/reception subsystem, and the optical transmission/reception subsystem may also make use of the optical subsystem **140,** such as the telescope **142.**

The optical subsystem **140** may further comprise one or more reflecting or partially-reflecting optical elements **144** configured to direct and focus light, combine wavelengths, or reject specific wavelengths from the incoming light. The (at least partially) reflecting optical elements **144** may include one or more optical elements of: flat mirrors, spherical mirrors, concave or convex mirrors, semi-mirrors (dichroic prisms, beam splitters), retroreflectors, deformable mirrors, deformable lenses, or other suitable types of mirrors or lenses. The one or more (at least partially) reflecting optical elements may be located at different positions within the observation system **100,** as described elsewhere within this Detailed Description. As an example, the (at least partially) reflecting optical elements **144** may be placed after the telescope, such as between the telescope and the AID(s) **116** and/or between the telescope and the optical transmitter **132** / receiver **134.** The (at least partially) reflecting optical elements **144** may also be part of the telescope, or may even be located before the telescope. The telescope, the AID(s), and the positioning mechanism, and optionally the at least partially reflecting optical element(s) may be used for image capturing, generally using natural illumination conditions over the objects or areas of interest, so that the solar light backscattered by the objects or areas of interest is detected by the sensor(s) **124** of the AID **116.** In some implementations, the telescope, the optical transmission/reception subsystem, and the positioning mechanism, and optionally the at least partially reflecting optical element(s), may be used for forming an image so that the light emitted by the optical transmitter **132** and subsequently detected by the optical receiver **134** may be used as image data which may not need to be naturally illuminated, since the system may use the information of the light transmitted impinging onto the objects or areas of interest and receive the backscattered radiation to form an image.

The present disclosure describes different exemplary embodiments of arrangements of observation systems or apparatuses for imaging scenes in apparent motion. The different exemplary embodiments comprise a different number and type of (at least partially) reflecting optical elements, a different number of AIDs and different combinations of positions and/or movements of the (at least partially) reflecting optical element(s), the optical transmitter/receiver and the AID(s) in different directions (perpendicular to the optical axis, parallel to the optical axis, in other directions in between, etc.). However, all the examples have in common that they allow to avoid motion blur when capturing images of scenes in apparent motion while allowing to save space by using at least some elements of the optical subsystem also by the optical transmission/reception subsystem.

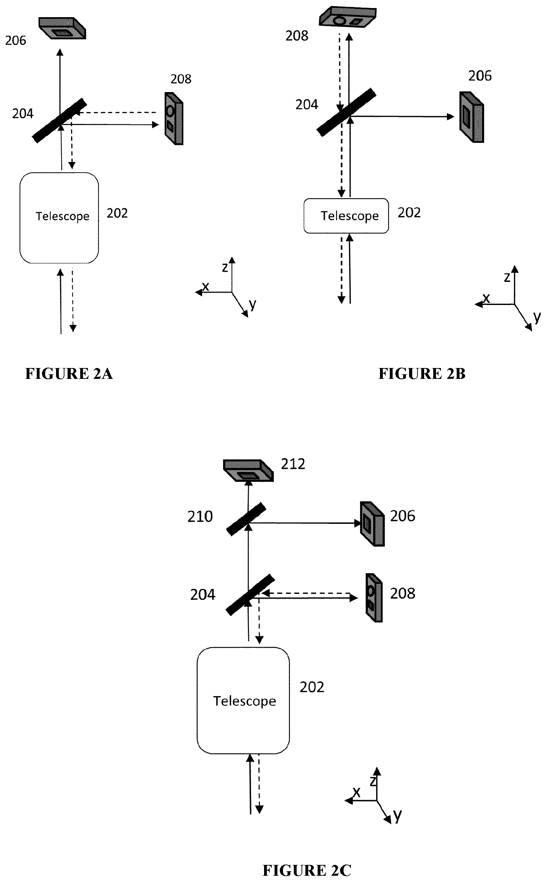

FIG. **2** (FIG. **2A, 2B, 2C**) schematically shows, in part, an arrangement of an example observation system. A representation of a coordinate system to help interpret FIG. **2** is provided, where the z axis represents the axis parallel to the main optical axis of the apparatus or system. In FIG. **2** the x axis may represent the direction of motion of the vehicle or apparatus or system, and the y axis is orthogonal to both the z axis and the x axis. It should be understood that the coordinate system represented in FIG. **2** (and also in other figures) is for illustrative purposes, and it is shown with the z axis aligned with the optical axis and the x axis aligned with the direction of motion of the vehicle for reasons of simplicity and ease of explanation. It should however be understood that other orientations of the coordinate system are also envisaged in the example of FIG. **2****.**

In the illustrative embodiment depicted in FIG. **2A****,** an AID **206** is represented. The AID **206** is configured to detect incident light and capture exposures. The AID **206** may be placed on (part of) a positioning mechanism **110,** such as on a platform (structure, stage) of the positioning mechanism, and the platform may be placed on a tracking rail which is also part of the positioning mechanism, if the AID is configured to be moved, however this is not necessary, as the AID may not be configured to be moved along a tracking rail. If the AID is configured to be moved along a tracking rail, an actuator such as a linear actuator may cause the platform to move along the tracking rail. In some embodiments, a transverse actuator that moves the platform along a transverse axis that is perpendicular to the tracking axis is also included.

The linear actuator is operable to move the platform along the tracking rail to compensate for the apparent motion of the scene for which images are being captured. The linear actuator for tracking is sufficiently fast to displace the platform at the speed of apparent motion, and to return to a start position sufficiently quickly such that another image exposure cycle can be accomplished with sufficient overlap between successively captured exposures and to increase the exposure time available to capture images. The linear actuator for tracking may be a piezoelectric motor, a stepper motor, or other suitable actuator or device.

In addition, the positioning mechanism may include a stand on which the tracking rail is placed, and a focus rail on which the stand is placed. The focus rail may include a linear actuator, such as an electric motor, and may be used to focus the AID **206** by allowing the stand to move along the focus rail. In certain embodiments, when the light that enters the apparatus is folded or partially reflected by an at least partially reflecting optical element, such as a mirror, the AID **206** will be positioned by the positioning mechanism so as to receive the folded or reflected rays, and the focus rail may be aligned with the direction of the rays incident on the AID. The length of the focus rail is, in embodiments, at least as long as any variations in the focus position of the AID **206.** In embodiments for which the distance between the AID **206** and the focus position is expected to remain constant or to have a sufficiently small variation (such as in a satellite imaging system), the run length of the focus rail may be set to a length slightly longer than the confocal length of the AID **206,** such as between a few microns and a few millimeters. Where the variation in focus position is expected to be sufficiently small, the focus may be adjusted in post-processing, e.g., algorithmically, thereby enabling the manufacturing tolerances in the linear actuator to be relatively relaxed. In certain embodiments, the positioning mechanism **110** does not comprise a focus rail, and the focus position may be adjusted and fixed during manufacturing. The stand may be moved by the linear actuator along the axis of the focus rail in the embodiments in which the focus rail is present.

The AID **206** may be configured, in a simple implementation, not to be moved, for example if the scene is not in apparent motion or if there is no need to compensate for the apparent motion. In another implementation, the AID may be configured to be moved only in one direction, thereby requiring only one linear actuator for tracking. In such implementation, the tracking rail and the platform may be oriented along a single axis, thereby only moving along one direction, for example along the x direction as in FIG. **2A** wherein the light has not been reflected by the at least partially reflecting optical element. For example, the AID may be configured to move only along the z direction as in FIG. **2B** wherein the light has been reflected at least partially by the at least partially reflecting optical element. This arrangement simplifies the complexity of the image stabilization system, and can be used in systems where the attitude of the vehicle is controlled with enough precision not to require stabilization in the axis transverse to the direction of movement (the y axis in FIG. **2**), so only forward motion compensation is required. In other words, this implementation can be used in configurations in which the movement of the vehicle with respect to the planet upon which it orbits, such as the Earth, is aligned.

The AID may however also be configured to be moved in multiple directions, being controlled by at least one linear actuator and at least one rotary actuator, or several linear actuators. For example, instead of being placed directly on a stand, the tracking rail may be placed on a circular plate that rotates within a circular rail, controlled by a rotary actuator beneath or otherwise coupled to the circular plate, and the circular rail may be placed on the stand. In this case, because of the presence of the circular rail, the platform is able to rotate and move along the tracking rail along a tracking axis z'. In some embodiments, a transverse actuator that moves the platform along a transverse axis that is perpendicular to the tracking axis is also included. The possible degree of rotation of the circular plate may be, in some embodiments, at least 180 degrees to enable orienting of the tracking rail to be at any angle, in order to account for any possible direction of apparent motion. The degree of rotation may be greater than 180 degrees in order to avoid potential problems where the direction of apparent motion happens to be near the rotational limit of the circular plate. The rotary actuator is sufficiently precise to maintain any misalignment between the tracking axis z' and the direction of apparent motion to be less than a single pixel of the AID **206** which is positioned on the platform. The rotary (rotational) actuator may be a piezoelectric or stepper motor, or other suitable actuator or positioning mechanism.

In alternative embodiments, instead of a rotational actuator, two actuators, such as two linear actuators, a y actuator and a z actuator are simultaneously moved such that the AID **206** tracks the direction of apparent motion (e.g., the tracking axis z'). Determining the speeds of tracking of the y and z actuators is determined in a substantially similar way. The tracking rail may also be placed on alternative structures that allow it to be moved along the x, y, z or other directions, and/or rotated about any direction.

In some embodiments of the observation system for use in satellites, such as in LEO satellites, the actuators are piezoelectric motors (in a variant, ultrasonic piezoelectric motors may be used instead). The rotary actuator may be a rotational motor around the x axis, used to orient the device with respect to the direction of travel. A linear motor with mechanical stabilization along the x axis may be used for focusing. The total run for the linear actuator for focusing may be enough to correct for possible variations in focus due to thermal dilation, mechanical effects, wavelength differences, etc.

The (at least one) AID **206** may also work in connection with an optical filter, which may be provided close (proximate) to or on the surface of the AID. For example, the optical filter may be a multi-band optical filter, which may include a plurality of filter bands for use with an observation system or apparatus for scenes in apparent motion; may be a filter array or filter mosaic which allows the transmission of specific wavelengths or range (band) of wavelengths organized in a, generally repeating, pattern or arrangement throughout the band, or any combination of these, for example a multi-band optical filter wherein a bands each may comprise a narrow range of wavelengths defined by a central wavelength, and another band is a mosaic filter

Filter bands are selected to cover desired fractions of the electromagnetic spectrum, and embodiments are not limited to any particular band or bands. The filter bands may include, for example, blue, infrared, green and red bands, with another band of unfiltered coverage (i.e., a panchromatic band). The number of filter bands, and the spectral transmission of each of the filter bands are chosen to acquire any combination of wavelengths of interest. The filter bands may be absorption filters, interference filters, or other kinds of filters. In some embodiments of the multi-band optical filter for use in satellites, such as in LEO satellites, the filter bands comprise five aligned bandpass filters for a set of desired sections of the electromagnetic spectrum. In one particular example, three of the filters correspond to Red, Green, and Blue (RGB) components of the visible spectrum, in order to easily compose conventional color images, with one of the remaining two bands corresponding to the whole spectrum of visible light, to get intensity information, and another of the remaining bands corresponding to near infrared. Other numbers and combinations of filters can be useful to gather different kinds of information whether used in satellites or other types of systems.

In some instances, a continuous variable optical bandpass filter is an example of an optical filter that can be utilized with embodiments described herein, wherein the range of spectral bandwidths having a high transmission varies continuously across the filter. Other examples of optical filters may be used with embodiments described herein and are contemplated herein as providing the features and benefits described.

An active surface of the AID **206** includes a plurality of pixel sensors, such as light-absorbing diodes, arranged in a two-dimensional or a three-dimensional space. The AID may be of various types, such as for example including at least one charge coupled device (CCD), at least one complementary metal oxide semiconductor (CMOS) sensor, and/or other suitable architecture.

In the exemplary embodiment of FIG. **2A****,** the apparatus or system may comprise one telescope **202** (which may comprise at least one lens), one AID **206,** one optical transmitter/receiver (transceiver) **208,** and one at least partially reflecting optical element which is a mirror **204.** Some elements which are part of the apparatus or system are not represented in FIG. **2A****,** as is evident for the skilled person. The telescope, together with the at least partially reflecting optical element, and any required additional elements, constitutes the optical subsystem of the apparatus.

In the embodiment of FIG. 2, multiple structures (platforms, stages) of the positioning mechanism may be used, and the AID **206** is mounted on a first positioning mechanism, while the optical transmitter/receiver **208** is mounted on a second positioning mechanism situated at a different location than the first positioning mechanism, so as to adapt to the available space. The mirror **204** may be a beam splitter (folding mirror, semi mirror, dichroic mirror) which is placed at a certain point along the optical path of the main telescope **202,** such as at the focal plane. The mirror **204** may be configured to reflect at least part of the incident light of certain frequency bands and to let light in other frequency bands pass. In the embodiment of FIG. **2A****,** the mirror **204** is designed/configured in such a way that the frequency bands of the light that passes through are detectable by the AID **206** to capture exposures (for example frequency bands of the visible spectrum). The mirror of FIG. **2A** is designed/configured in such a way that the frequency bands of the light that is reflected by it are detectable by the optical transmitter/receiver **208** (for example frequency bands for optical communications, such as in the near infrared, or frequency bands for light scanning applications, such as ultraviolet or visible laser wavelengths). In this configuration, both the AID and the optical transmitter/receiver may be used simultaneously, but this is not necessary. In fact, both the area imaging device and the optical transmission/reception subsystem may operate independently, and because of the presence of the mirror, the same telescope may be used both for image capturing and for optical transmission/reception applications (e.g. optical communications, light detection and ranging determinations), thereby saving space and avoiding redundancy of elements, while also providing a higher transmission speed of optical communications information, as the optical communications module can make use of the large aperture of the main imaging telescope, and providing more versatility to the system, since the observation system may further implement applications based on light scanning technology.

The mirror **204** may have a certain inclination angle with respect to the direction of the optical axis of the apparatus (z axis in the exemplary embodiment of FIG. **2A**). In an exemplary embodiment, for simplicity, the angle is 45 degrees. The mirror may receive incident light passing through the telescope **202,** may reflect part of the incident light towards the optical transmitter/receiver **208,** and may let part of the incident light pass through towards the AID **206.** For example, the mirror **204** may reflect light wavelengths below a certain wavelength threshold, and let light wavelengths equal to or above the certain wavelength threshold pass. For example, the mirror **204** may reflect light of wavelengths above the visible light, for example above around 700 nm, towards the optical transmitter/receiver **208.** One of the AID **206** or the optical transmitter/receiver **208** may be determined to be switched off. The bands for optical communications are generally located within the near infrared band which starts at about 750 nm. The mirror **204** may also split the light at around 1000 nm, around 1500 nm, or at any other suitable wavelength. Similarly, the bands for light scanning implementations like LIDAR applications are generally located within the visible or (near) infrared band, and include more particularly narrow laser beams which provide higher resolution. Because the bands for optical transmission/reception applications are close to the bands of visible light, the optical instruments used both for image capturing and for optical transmission/reception applications may have similar characteristics or constraints, such as the same lenses, and therefore at least part of the telescope for image capturing can be used for optical transmission/reception applications.

The optical transmitter/receiver **208** may be configured to be moved at least along one axis, or in multiple axes so as to be able to move in three dimensions. When the optical transmitter/receiver is used for optical communications, this movement can be used to change the way the optical transmitter (laser) is injected in the telescope, generating a deflection in the output beam that can be used to fine search for a ground station, without requiring to reorient the spacecraft in order to change the direction of the beam, to change the degree of collimation of the beam thereby making it possible to get a wider footprint on the ground at expenses of decreased power density, or to concentrate the beam to get a smaller footprint and a stronger signal. Similarly, when the optical transmitter/receiver is used for light scanning applications like LIDAR, the movement may be used to deflect the beam in order to scan an object, surface or volume, and/or change the collimation of the beam to adjust the extent or scope of the footprint. For example, if the optical transmitter/receiver **208** is moved in any direction on the plane y-z (as represented in FIG. **2A**), the effect will be a movement in tip and tilt, in other words across-track and along-track, of the target. This may be useful, in optical communications, to search for an antenna, such as a ground station antenna, or a telescope, for example by doing a sweep search or a spiral search moving the optical transmitter/receiver along the plane y-z. In case of LIDAR applications, this movement may be useful to perform a scan of the terrain. For another example, if the optical transmitter/receiver **208** is moved in the x direction, a defocus phenomenon will occur, where the diameter of the beam is changed: if moving towards the mirror (in the left direction in FIG. **2**), the beam diameter will become larger. For optical communications, this may not be desirable for high speed transmission/reception of data, but may be useful to search in an area, by defocusing the beam but increasing the coverage area of the beam. A low speed communication can take place to establish a connection, and once the connection is established, for example, the optical transmitter/receiver may be moved back (towards the right direction in FIG. **2**) thereby decreasing the diameter of the beam and allowing for higher speed communication. For LIDAR applications, this movement will change the resolution of the LIDAR, so for example it would be possible to reduce the resolution covering more terrain, or increase the resolution covering less terrain.

Alternatively or in addition to moving the optical transmitter/receiver, the mirror **204** may be moved in different ways, to achieve the deflection effect or the beam collimation adjustment described above. The mirror **204** may be moved (by translation) and/or may be rotated. For example, the mirror **204** may be moved at least along one axis, or in multiple axes so as to be able to move in the three dimensions. The mirror may be also rotated about for example the y axis, or longitudinally about its own axis.

In exemplary embodiments, a phase modulation filter may be placed at the output of the laser to adjust/modify its wavefront to improve the search capabilities of the beam. The optical transmitter/receiver **208** may be moved by a positioning mechanism that comprises at least one linear actuator and/or at least one rotary (rotational) actuator, which may be piezoelectric or stepper motors, or other suitable actuators or positioning mechanisms.

The exemplary embodiment of FIG. **2B** is similar to the one of FIG. **2A****,** however the position of the AID **206** and the optical transmitter/receiver **208** is switched. In the embodiment of FIG. **2B****,** the mirror **204** is designed/configured in such a way that the frequency bands of the light that is reflected are detectable by the AID **206** to capture exposures (for example frequency bands of the visible spectrum). The mirror **204** is designed/configured in such a way that the frequency bands of the light that passes through it are detectable by the optical transmitter/receiver **208** (for example wavelength bands for optical communications, such as in the near infrared, or wavelength bands for light scanning applications, such as infrared (e.g. near infrared or short-wavelength infrared) or visible wavelengths). Also in this configuration, both the AID and the optical transmitter/receiver may be used simultaneously or in parallel, in an independent manner from each other, and because of the presence of the mirror, the same telescope may be used both for imaging and for optical transmission/reception, thereby saving space and avoiding redundancy of elements, while providing a higher transmission speed of optical communications information, as the optical transmission/reception subsystem can make use of the large aperture of the main imaging telescope, and providing more versatility to the system, since the observation system may further implement applications based on light scanning technology.

Similarly to FIG. **2A****,** the optical transmitter/receiver **208** may be configured to be moved at least along one axis, or in multiple axes so as to be able to move in three dimensions, to allow for fine search for a ground station, keeping the spacecraft still, or changing the degree of collimation of the beam.

In the configuration of FIG. **2B****,** in order to perform image stabilization, the stabilization system must compensate for the apparent motion of the scene. The stabilization system comprises the positioning mechanism, the AID **206,** which may have to move so as to compensate for the apparent motion, and may also comprise the mirror **204,** which may also move and/or rotate to compensate for the apparent motion. In order to do so, either the mirror **204,** the AID **206,** or both of them may be configured to be moved by the positioning mechanism under the control of the control module. Mirror **204** may thus have a dual use in this configuration, which allows to save space. On one hand it splits the light so as to allow the area imaging device and the optical transmission/reception subsystem to share the same telescope, and on the other hand it may be configured to move so as to contribute to the image stabilization mechanism. In addition, not only in this configuration but in other configurations according to the present invention as well, such as in the configuration of FIG. **2A****,** the mirror may more broadly be an optical element that separates and corrects the light when necessary. Using different wavelengths with the same optical subsystem could lead to different aberrations or different focal lengths, so this optical element, on top of separating the light depending on the wavelength, could also correct for aberrations or focal length (for example if the optical subsystem further comprises a lens) or even correct higher order aberrations with adaptive optics.

The mirror **204** may be moved in different ways when configured to be moved to perform image stabilization. The mirror **204** may be moved (by translation) along at least one axis (such as the x axis or the z axis) or along multiple axes, and/or may be rotated (such as about the y axis or about the mirror's longitudinal axis). By moving the mirror in a direction along the x or z axis, or by rotating the mirror about the y axis or about its own longitudinal axis, at the different positions of the mirror, the rays of light that pass through the telescope also hit the mirror at different points on the mirror, which in turn cause the rays to be reflected at lower or higher positions along the z axis and to reach the AID **206** at different positions along the z axis. An additional effect may be a change on the focus of the AID **206** in the x axis direction, because the effect of moving the mirror in this way is for the AID as if the scene being imaged is moved in diagonal, that is, not only moved along the z axis, but is also moving closer and further from the AID. In other words, for the AID it is as if the scene being imaged is moved up and down, but also closer and further, so this movement can be also used to adjust the focus of the image. The AID **206** may, in addition or alternatively to the mirror, be moved in different ways when configured to be moved to perform image stabilization. The AID **206** may be moved (by translation) along at least one axis (such as the x axis or the z axis) or along multiple axes, and/or may be rotated. By moving the AID along the z axis, at the different positions of the AID, the rays of light that pass through the telescope and are reflected by the mirror reach the AID at different positions along the z axis, which for the AID is as if the scene being imaged is moved. The AID may also be moved in other directions, such as in the y-z plane, and/or it may be rotated. The advantage of the structure of FIG. **2B** is that, by moving the AID **206,** moving the mirror **204,** or by moving both the AID and the mirror, additional levels of freedom of movement of moving elements can be achieved, and the resulting composed movement can be controlled so that it can optimize other aspects of the apparatus, such as allowing to place an optical transmitter/receiver making use of at least some of the same elements used for the imaging system.

Although the examples of FIG. **2** show movement of the AID and/or the mirror along the z-axis or along the x-axis, it should be understood that other movements along other directions can be also performed, for example to generate images with increased resolution.

The actuators controlled by the positioning mechanism may include linear actuators and rotary actuators. Linear actuators for tracking may include piezoelectric motors, stepper motors, ultrasonic piezoelectric motors, or other suitable actuator or device. The rotary actuators may be piezoelectric motors, stepper motors, or other suitable actuators. Each mirror **204** may be displaced by a linear motor, by two or more linear motors, or by at least one rotary motor, and may be rotated by at least one rotary motor. Each AID **206** may be displaced by a linear motor, by two or more linear motors, or by at least one rotary motor. Each optical transmitter/receiver **208** may be displaced by a linear motor, by two or more linear motors, or by at least one rotary motor.

The mirror(s), optical transmitter/receiver, and/or the AID(s) may alternatively be located on an n-axis positioning mechanism such as a tetrapod, an hexapod, or an octopod, which provide high precision movements, instead of being moved by linear and/or rotary actuators. This has the advantage of providing additional degrees of freedom for the movements that can be performed. Alternatively, the positioning mechanism may include multiple single-axis positioning mechanisms arranged in sliding platforms and wedges for composing the movement. In some instances, linear actuators may control the sliding platforms.

In certain exemplary embodiments, a mirror for optical transmission/reception can be combined with additional mirrors. For example, as shown in FIG. **2C****,** a first mirror **204** can be located to reflect the light that is to be sent to the optical transmitter/receiver **208,** while letting the remaining light pass, and this remaining light may then reach a second mirror **210** that has a different configuration, and is for example configured to reflect light in the red and near infrared bands towards one AID such as **206,** and let the light corresponding to the green and blue bands pass towards another AID such as **212.** Other combinations or implementations are also possible, as will be evident for the skilled person, and have the advantage that, because at least one at least partially reflecting optical element is located at a certain point in the optical path to send at least some light towards the optical transmission/reception subsystem, one and the same telescope can be used both for image capturing and for optical transmission/reception, thereby making a more efficient use of the available space in the apparatus while still allowing for removing motion blur.

In the configurations of FIG. **2A-2C****,** alternatively or additionally to the described movements of the different elements, the telescope **202** may comprise at least one deformable optical element, such as a deformable lens or a deformable mirror, which can be useful to perform arbitrary scanning movements, displacements or scans across the focal plane, for example to improve pointing accuracy or for image stabilization. For example, if the telescope has a deformable lens and/or a deformable mirror, in order to perform image stabilization, the deformable lens and/or deformable mirror may be use to complement the movement of the mirror **204** and/or the AID **206,** or it may not be necessary for the positioning mechanism to move the mirror **204** and/or the AID **206,** because the same movement in the scene may be achieved by deforming the lens and/or mirror inside the telescope. In order to perform optical transmission/reception with the optical transmitter/receiver **208,** the deformable lens and/or deformable mirror may be used to complement the movement of the mirror **204** and/or the optical transmitter/receiver **208,** or it may not be necessary for the positioning mechanism to move the mirror **204** and/or the optical transmitter/receiver **208,** because the same change in the beam and/or the same search capabilities may be achieved by deforming the lens and/or mirror inside the telescope to change the direction of the beam.

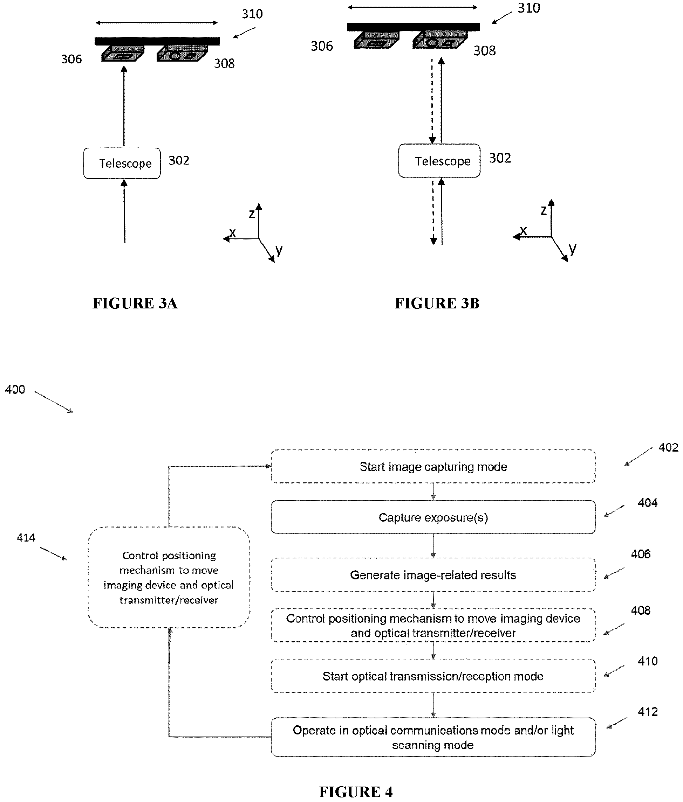

FIG. **3** (FIG. **3A** and **3B**) schematically shows, in part, an arrangement of an example observation system.

In the exemplary embodiment of FIG. **3****,** the apparatus or system comprises a telescope **302,** one AID **306** and one optical transmitter/receiver **308,** but differently from the embodiments of FIG. **2****,** it does not comprise any mirror. In the configuration of FIG. **3****,** the AID **306** and the optical transmitter/receiver **308** are mounted/placed on the same structure (stage, platform) **310** of the positioning mechanism of the observation system, and the control module can control the positioning mechanism to move the stage **310** containing the AID **306** and the optical transmitter/receiver **308** along a positioning axis, so as to switch between an image capturing mode and an optical transmission/reception mode, depending on whether the AID or the optical transmitter/receiver is placed so as to receive the incident light. In this exemplary configuration, the same telescope **302** and the same stage **310,** which would be used for image capturing, can be used for optical transmission/reception, thereby making a more efficient use of the available space, and allowing to use, for optical communications, a bigger aperture than the aperture allowed if the optical communications system was located in a separate and independent subsystem, and providing more versatility to the system, since the observation system may further implement applications based on light scanning technology. Similarly to the embodiments of FIG. **2****,** the optical transmitter/receiver **308** may be configured to be moved at least along one axis, that may be the same or different from the positioning axis, or in multiple axes so as to be able to move in three dimensions, to allow for fine search for a ground station, keeping the spacecraft still, or changing the degree of collimation of the beam. Also similarly to the embodiments of FIG. 2, the AID **306** may be configured to move along one axis, which may be the same or different from the positioning axis, or along multiple axes in order to compensate for the apparent motion of the scene for which images are to be captured. In this case, the stage on which the AID **306** and the optical transmitter/receiver **308** are located may further include mechanisms (such as additional sub-stages or sub-platforms with corresponding actuators and controllers) to individually move the AID to compensate for apparent motion or the optical transmitter/receiver to finely search a target or modify the degree of collimation of the light beam. Alternatively, the stage on which the AID **306** and the optical transmitter/receiver **308** are located may not include further sub-stages or sub-platforms, and instead, the stage itself can be moved so that the AID **306** can compensate for the apparent motion of the scene, in cycles of shorter distance and appropriate frequency, both the distance and the frequency adapted to the speed of apparent motion.

An advantage provided by this configuration is that both the AID and the optical transmitter/receiver can be placed in the same plane, so for example they can both be located in the same printed circuit board (PCB), which provides advantages to the electronic and mechanical design.

In the configurations of FIG. **3A-3B****,** alternatively or additionally to the described movements of the different elements, the telescope **302** may comprise at least one deformable optical element, such as a deformable lens or a deformable mirror, which can be useful to perform arbitrary scanning movements, displacements or scans across the focal plane, for example to improve pointing accuracy. For example, if the telescope has a deformable lens and/or a deformable mirror, in order to switch between an image capturing mode and an optical transmission/reception mode and/or in order to perform image stabilization, and/or in order to improve search capabilities or changes in the beam of the optical transmitter/receiver, the deformable lens and/or deformable mirror may be used alternatively or additionally to the movement of the stage **310,** the AID **306** and/or the optical transmitter/receiver **308.**

In the exemplary embodiments with more than one AID and/or with more than one mirror, the movement of the elements can be performed in synchrony as seen above, or the elements may be moved independently from one another, each element having its own control loop.

In order to determine the speed of apparent motion, so as to determine the speed of movement of the AID(s) and/or the at least partially reflecting optical element(s) (such as mirrors) to compensate for apparent motion when in the image capturing mode, the control module may use a priori information and/or sensor information according to some exemplary embodiments. For example, the speed of apparent motion may be determined from sensor information (for example from movement sensors or other sensors) and orbit information, for example based at least in part on orbit characteristics of the apparatus and on characteristics of the optical subsystem. The orbit characteristics may comprise information associated with at least one of an altitude, a velocity, a shape, a position and an orbital period of the apparatus, or another orbit-related information. The characteristics of the optical subsystem may comprise at least one of an aperture diameter and a focal length of the telescope. For example, the orbit of a LEO satellite may be 700km high in a typical situation. At this altitude, the orbital period is 98 minutes and 37 seconds and the projected velocity on the ground is 6764m/s. A telescope may be a Cassegrain with an aperture diameter of 30cm and a focal length of 2.5m. Thus, each meter on the ground will be projected as a 3.6µm image on the focal plane, and will be moving at 24.2mm/s. The linear actuator for tracking is able to move at least at this velocity in order to compensate for the movement of the image. Based on this information, the speed of movement of the moving elements (AID(s) and/or totally or partially reflecting optical element(s) (e.g.mirror(s) and/or other stabilizing optical elements)) can be obtained. The maximum speed of the linear actuator for tracking may be several times higher in order to reduce the time it takes to return the linear actuator for tracking to the start position.

According to some embodiments, the control module may alternatively or additionally use image analysis of the captured images in order to determine the speed of apparent motion, such as image flow analysis, optical flow analysis, phase correlation analysis, or image correlation analysis. Operations based on image displacement from successive images can be used. In some implementations, the operations may include determining vertical and/or horizontal gray projections that can be used to find the displacement between two images.

Displacements between successive images may be determined using any type of image analysis, such as using gray projections, image flow analysis, image correlation operations, or the like. Correlation could be done with the whole image, portions of the images, or gray projections. Correlation could be done using a correlation algorithm to measure the displacement of features contained within the image. Some embodiments of the present disclosure correlate using gray projections, which may reduce the computational resources used to perform the function. In some embodiments, once the system is running, or based on having used some initial estimation of direction of apparent motion (e.g., from the known attitude of a aircraft or spacecraft), the system further reduces the correlation to a vicinity of the estimated displacement (instead of evaluating the full range of possible displacements). This further reduces the processing time. In the above description, "attitude" is the direction in which the imaging system is headed, defined for example by three angles with respect to some reference.

### Example Operations

FIG. **4** depicts a flow graph that shows example processes in accordance with various embodiments. The operations of these processes are illustrated in individual blocks and summarized with reference to those blocks. These processes are illustrated as logical flow graphs, each operation of which may represent a set of operations that can be implemented in hardware, software, or a combination thereof. In the context of software, the operations represent computer-executable instructions stored on one or more computer storage media that, when executed by one or more processors, enable the one or more processors to perform the recited operations. Generally, computer-executable instructions include routines, programs, objects, modules, components, data structures, and the like that perform particular functions or implement particular abstract data types. In the context of hardware, the operations may be carried out in an integrated circuit, such as in an application specific integrated circuit (ASIC), a programmable logic device, such as a field programmable gate array (FPGA), graphics processing unit (GPU), tensor processing unit (TPU), digital signal processors (DSPs), central processing units (CPUs), or a software defined radio (SDR). Other examples of hardware may be used with the embodiments described herein and are contemplated herein as providing the features and benefits described. The order in which the operations are described is not intended to be construed as a limitation, and any number of the described operations can be combined in any order, separated into sub-operations, and/or performed in parallel to implement the process. Processes according to various embodiments of the present disclosure may include only some or all of the operations depicted in the logical flow graph. Moreover, the operations may be carried out by a single system, such as onboard a spacecraft or ground-based station, or may be shared between multiple systems located onboard the spacecraft or ground-based systems.

FIG. **4** is a flow diagram showing an example overview process **400** for image capture and optical transmission/reception using an observation system or apparatus for imaging scenes in apparent motion according to embodiments of the present disclosure. At **402,** the control module starts the image capturing mode, for example when the at least one imaging device is located at the focal plane. Step **402** may be implicitly performed and not explicitly, that is why it is shown with dashed lines in FIG. **4****,** to show that it may or may not be present. The control module may optionally direct the positioning mechanism to move at least one imaging device and/or at least one (at least partially) reflecting optical element along a tracking axis. In some implementations, the imaging device may be an area imaging device (AID), and this movement may be performed to compensate for an apparent motion of a scene being imaged, but this is not required. The at least one direction may be determined in different ways, as described elsewhere within this Detailed Description. At **404,** the control module directs the imaging device to capture at last one exposure. If apparent motion is to be compensated and an area imaging device (AID) is used, this can be done by directing the positioning mechanism to move at least one of the at least one AID and the at least one (at least partially) reflecting optical element along the tracking axis in one or more cycles and to direct the AID to capture at least one exposure during each of the one or more cycles to generate a plurality of partially overlapping exposures.

At **406,** which may or may not be performed, the imaging module processes the exposures to generate an image, such as by stitching together the plurality of overlapping exposures to form an image of the scene. The processing may include utilizing multiple exposures from each cycle at different exposure times to generate high dynamic range images. The processing may include higher resolution images from multiple exposures per cycle each taken with a displacement that is not an integer multiple of a single pixel, such as sub-pixel horizontal displacements and/or sub-pixel vertical displacements as described elsewhere within this Detailed Description. Images from consecutive and partially overlapping images are stitched together. A sufficient number of exposures can be obtained to generate an image of any length. A stitching algorithm is utilized in some embodiments to generate a final image (or video frame) from the multiple partially overlapping exposures. Multiple exposures may be captured during each cycle. Each intra-cycle exposure may have a different exposure time, in order to provide advantageous or optimal exposure times for each filter band, in order to generate a high dynamic range image.

Once the control module determines that the image capturing mode is complete, and/or when it determines that the optical transmission/reception mode should start, even if the image capturing mode is not complete, because for example data transmission/reception has higher priority at a certain moment, or because the control module has received instructions from other modules of the system or from outside the system, such as from a ground station or from another spacecraft, at **408,** the control module controls the positioning mechanism to move the stage containing the at least one imaging device and the at least one optical transmitter/receiver to start, at **410,** the optical transmission/reception mode. This step may be omitted if the system is configured to operate at the image capturing mode and the optical transmission/reception mode simultaneously, or if it is configured to operate in either one of the modes without having to move the positioning mechanism to switch from one mode to another. As seen elsewhere within this Detailed Description, the optical transmission/reception mode can comprise an optical communications mode, in which optical data is transmitted to a transmission medium or received from the transmission medium, and it may comprise a light scanning mode, such as by using LIDAR, in which light is captured to be used for targeting an object or a surface with a laser light transmitter and measuring the time for the reflected light to return to the laser light receiver to determine lengths, distances or ranges, and/or to form images of a scene based on the transmitted/received laser light, useful for exposures with reduced or no solar light illuminating the object or surface, and/or to perform substance detection such as methane detection or wind speed detection.

At **412,** the optical transmission/reception subsystem may operate in optical communications mode and/or light scanning mode. If the optical Tx/Rx subsystem operates in optical communications mode, it may encode information into optical signals and transmit the optical signals and/or receives optical signals and decodes information from the optical signals. Alternatively or additionally, if the optical Tx/Rx subsystem operates in light scanning mode, it may emit (transmit) electromagnetic radiation (light) of a predetermined wavelength to target objects, substances or surfaces of interest and detect (receive) the reflected or backscattered electromagnetic radiation to determine topography, substance concentration, generate images, or derive any information from the collected data. The method can remain in the optical communications mode as long as the control module determines it is necessary, and the control module may again control the positioning mechanism to move, at **414,** the at least one imaging device and the at least one optical transmitter/receiver to start again, at **401,** the image capturing mode. This step may also be omitted if the system is configured to operate at the image capturing mode and the optical transmission/reception mode simultaneously, or if it is configured to operate in either one of the modes without having to move the positioning mechanism to switch from one mode to another.

The method of FIG. **4** focuses on embodiments in which the operation mode is changed between image capturing mode and optical transmission/reception mode. This may be done when the configuration of the optical subsystem is similar to that of FIG. **3****,** in which the AID and the optical transmitter/receiver are mounted/placed on the same structure (stage, platform) of the positioning mechanism of the observation system. The method can also be applicable when the configuration of the optical subsystem is similar to that of FIG. **2** (see dashed lines that represent steps that may not be present) but when the system is configured (either temporarily by controlling instructions or permanently) not to operate in both modes simultaneously. When the system is configured to operate in both modes simultaneously, as can happen with the configurations of FIG. **2****,** the steps **402, 404, 406, 410** and **412** can be perform independently and/or in parallel, and there is no need to perform steps **408** and **414** to switch modes.

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

Also, the phraseology and terminology used herein is for the purpose of description and should not be regarded as limiting. Any references to embodiments or elements or acts of the systems and methods herein referred to in the singular may also embrace embodiments including a plurality of these elements, and any references in plural to any embodiment or element or act herein may also embrace embodiments including only a single element. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms.

In the descriptions above and in the claims, phrases such as "at least one of' or "one or more of' may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B:", "one or more of A and B:", and "A and/or B' are each intended to mean "A alone, B alone, or A and B together." A similar interpretation is also intended for lists including three or more items. For example, the phrases "at least one of A, B, and C:", "one or more of A, B, and C:" and "A, B, and/or C" are each intended to mean "A alone, B alone, C alone, A and B together, A and C together, B and C together, or A and B and C together." In addition, use of the term "based on" above and in the claims is intended to mean "based at least in part on", such that an unrecited feature or element is also permissible.

### Conclusion

The subject matter described herein can be embodied in systems, apparatus, methods, and/or articles depending on the desired configuration. Although the disclosure uses language that is specific to structural features and/or methodological acts, the invention is not limited to the specific features or acts described. Rather, the specific features and acts are disclosed as illustrative forms of implementing the subject matter described herein. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. An apparatus for an observation system, the apparatus comprising:
an optical subsystem comprising one telescope;
at least one imaging device having a plurality of pixel sensors and configured to receive light that has passed through the optical subsystem;
at least one optical transmitter/receiver configured to transmit an optical signal towards the optical subsystem and/or receive the optical signal from the optical subsystem; and
a control module configured to control the optical subsystem, the at least one imaging device and the at least one optical transmitter/receiver.

2. The apparatus according to claim 1, further comprising at least one at least partially reflecting optical element configured to receive light and separate the received light based on frequency, so as to reflect a first part of the received light to be received by one of the at least one imaging device or the at least one optical transmitter/receiver, and to let a second part of the received light pass therethrough to be received by the other one of the at least one imaging device or the at least one optical transmitter/receiver.

3. The apparatus according to claim 2, further comprising a positioning mechanism configured to move at least one of the at least one imaging device, the at least one optical transmitter/receiver or the at least one partially reflecting optical element, wherein the control module is configured to control the positioning mechanism.

4. The apparatus according to claim 1, further comprising a positioning mechanism configured to position the at least one imaging device and/or the at least one optical transmitter/receiver based on a position of the optical subsystem, wherein the control module is configured to control the positioning mechanism.

5. The apparatus according to any one of claims 3 or 4, wherein the positioning mechanism is further configured to move at least one of the at least one imaging device along a first tracking axis or the at least one optical transmitter/receiver along a second tracking axis, wherein preferably the second tracking axis follows a direction different from a direction of the first tracking axis.

6. The apparatus according to claim 5, wherein the control module is configured to determine at least one of the direction of the first tracking axis and the direction of the second tracking axis based at least in part on a direction of the center of mass of the apparatus.

7. The apparatus according to any one of the preceding claims, wherein the at least one imaging device is mounted on a first stage and the at least one optical transmitter/receiver is mounted on a second stage different from the first stage.

8. The apparatus according to any one of claim 4, claim 5 when depending on claim 4, or claim 6, wherein the at least one imaging device and the at least one optical transmitter/receiver are mounted on one and the same stage, and wherein the control module is further configured to control the positioning mechanism to move the stage along a positioning axis so as to position one of the at least one imaging device or the at least one optical transmitter/receiver on a focal plane of the telescope.

9. The apparatus according to any one of the preceding claims, further comprising an imaging module, wherein the control module is configured to direct the at least one imaging device to capture at least one exposure during each of the one or more cycles to generate one or more exposures, and wherein the imaging module is configured to form an image of the scene based at least in part on the one or more exposures.

10. The apparatus according to any one of the preceding claims, wherein the optical transmitter/receiver is configured to perform optical communications and/or light detection and ranging, LIDAR, operations.

11. The apparatus according to any one of the preceding claims, being all or partially on-board an aircraft or spacecraft, such as the satellite.

12. A satellite system comprising the apparatus according to any one of the preceding claims.

13. A computer-implemented method of operating an observation system, the method comprising the steps of:
a) controlling an imaging module to capture at least one exposure through at least one imaging device, wherein the imaging device is configured to receive light that has passed through an optical subsystem comprising one telescope; and
b) controlling the at least one optical transmitter/receiver to operate in an optical communications mode, and/or in a light scanning mode, wherein the at least one optical transmitter/receiver is configured to transmit an optical signal towards the optical subsystem and/or receive the optical signal from the optical subsystem.

14. The computer-implemented method according to claim 13, wherein step a) and step b) are performed in a simultaneous or time overlapping manner.

15. The computer-implemented method according to claim 14,
further comprising, between step a) and step b) and/or between step b) and step a), a step b1) of controlling a positioning mechanism to move the at least one imaging device and the at least one optical transmitter/receiver located on one and the same stage; or
further comprising the step of controlling the positioning mechanism to move the at least one imaging device and/or the at least one optical transmitter/receiver.
